# EUROPEAN PATENT APPLICATION

(11) **EP 1 759 774 A1**
(43) Date of publication of application: **07.03.2007**
(21) Application number: 05108110.7
(22) Date of filing: 05.09.2005
(51) Int. Cl.: B05D 1/00, B05D 3/00

(54) **Process for coating stones and coated stones**

(71) Applicant: Akzo Nobel Coatings International B.V., 6824 BM Arnhem (NL)
(72) Inventor: Wittig, Michael, D-64297, DARMSTADT (DE); Surmund, Daniela, D-64625, BENSHEIM (DE)
(74) Representative: Schalkwijk, Pieter Cornelis

(57) **Abstract**

The invention pertains to a process for coating stones comprising the steps of providing stones with a diameter over their largest axis of at most 10 cm in a single layer and providing, in one or more steps, the stones with a layer of a powder coating composition in such a manner that at least 70% of the surface of the stones is coated with a powder coating composition. The process may be carried out in one or more steps. It is preferably carried out in a continuous mode.

The invention also pertains to a stone provided with a cured layer of a powder coating composition, where the stone has a diameter over its largest axis of between 0.5 and 10 cm, preferably between 1.5 and 5 cm, and where the cured layer of powder coating composition has a thickness between 20 and 300 microns, preferably between 50 and 100 microns. A set of such stones where the diameter over their largest axis of the largest 5% (by number) of stones in the set of stones is at most three 3 times as large as the diameter over their largest axis of the smallest 5% (by number) of stones in the set of stones, more preferably at most 2.5 times, still more preferably at most 2 times, is also claimed.

## Description

The present invention deals with coated stones and with a process for manufacturing coated stones.

Coated stones and processes for the manufacture thereof are known in the art.

For example, US 1,838,287 describes a process for colour-coating pebbles by contacting them in a rotatable tumbler with, e.g., enamel. If enamel is used, the coated pebbles are baked at a temperature of 250°F (111°C). The coated pebbles are described as suitable for creating "stucco" and "pebble dash" in architectural applications, and ornamental work on the interior.
Natural pebbles the surface of which is painted are also described in South African patent application No. 2001-02195. The pebbles are coated by placing them in a sieve and then dipping them into a pot of paint. The excess paint is removed and the stones are placed on a stand to dry.
Israeli patent application No. 114510 describes a material for covering an outdoor ground surface, which comprises gravel with a diameter of, preferably, 8-12 mm, coated with a plastic material in a layer thickness of 0.5-1.5 mm. The pebbles are coated either by dipping them into liquid plastic or by contacting heated pebbles with powdered plastic in a rotary drum.
JP laid-open 11-170800 and JP laid-open 11-172609 describe making patterns from colour-coated crushed stone. In these reference the crushed stone is coated with liquid coatings.

The above-mentioned references give various applications for colour-coated stones and also describe various methods for manufacturing them. However, a number of disadvantages associated with the stones and the manufacturing methods described in these references can be identified.

In the first place, a number of references describe processes where the stones are treated with liquid paint or liquid plastic, e.g., by placing the stones in a porous receptacle, dipping them into the liquid paint or plastic, and then drying the coated stones thus obtained. In such a production process the stones will move against each other while the paint is still wet. This will detrimentally affect the quality of the coating film eventually obtained. Another disadvantage of the use of liquid paints or plastics concerns the environmental aspects thereof. Especially in the case of solvent-based based paints, the use of an open paint vessel required for the dipping process described may be hazardous to the environment and to the health and safety of the workers carrying out the process.
For stones coated with liquid paint the thickness of the paint layer is often limited and in any case difficult to regulate. Especially when dealing with natural stones this is a disadvantage, because an increased layer thickness will help to mask irregularities in the stone surface.

The process where a powdered material such as plastic or enamel is added to a rotating vessel containing the stones to be coated also has disadvantages. In the first place, due to the stones rubbing against each other, the powdered material that is to be coated onto the stones will rub off, leading to an incomplete coating. Further, if the stones are heated during the process, as is described in Israeli patent application No. 114510, the powdered material will adhere not only to the stones, but also to itself and to the walls of the vessel in which they are heated up due to contact with the heated stones. If hot air is used to heat up the stones, the coating material may be blown out of the coating vessel. All in all, this type of coating process is difficult to control.

Accordingly, there is need for a process for coating stones which leads to the application of a high-quality coating in an environmentally friendly manner.
There is also need for stones coated with a uniform coating layer of high quality, optionally in an increased thickness.
The present invention solves these problems by the provision of the coating process and the coated stones according to the invention. Other problems solved by the present invention and advantages associated therewith will become apparent from the present specification.

The present invention pertains to a process for coating stones comprising the steps of providing stones with a diameter over their largest axis of at most 10 cm in a single layer, and providing, in one or more steps, the stones with a layer of a powder coating composition in such a manner that at least 70% of the surface of the stones is coated with a powder coating composition.

The stones to be coated using the process according to the invention and the coated stones according to the invention have a diameter over their largest axis of at most 10 cm. If they are larger than this, they will be too unwieldy to handle in the process according to the invention. The stones' diameter over their largest axis generally is at least 0.5 cm. Preferably, their diameter over their largest axis is at most 5 cm, more preferably at most 3 cm. Preferably, the stones' diameter over their largest axis is at least 1 cm, more preferably at least 1.5 cm.
In order to obtain particular aesthetic effects, it may be desirable for the stones in a set of stones to have a relatively narrow size distribution. In this case, the diameter over their largest axis of the largest 5% (by number) of stones in a set of stones preferably is at most three 3 times as large as the diameter over their largest axis of the smallest 5% (by number) of stones in a set of stones, more preferably at most 2.5 times, still more preferably at most 2 times.
The mean diameter over their largest axis of the stones in a set of stones (by number) preferably is in the range of 1 to 7 cm, more preferably 2-3 cm.

The stones used in the process of the invention may have any shape. It may be preferred for them to be smooth rather than angular. The use of pebbles is preferred, but other stones like rock chips or any other stone material, such as chips of building stones or street tiles may also be used. Preferably, the material is washed and classified to the desired size range before use.

The process of the present invention can be carried out in a number of different ways. In a first embodiment, the stones are provided with a layer of a powder coating composition in a two-step coating process comprising the steps of
- providing the stones with a layer of powder coating on one side,
- optionally curing the powder coating
- providing the stones with a layer of powder coating on their other side, and
- curing the powder coating.

As indicated, the process can be carried out with or without curing after the stones have been provided with a layer of powder coating on one side and before they are provided with a layer of powder coating on their other side. Whether or not such a curing step is carried out will depend, int. al., on whether the mode of application of the layer of powder coating composition in the second step will detrimentally affect the properties of the coating layer applied in the first step. For example, if the coating provided in the first step does not adhere sufficiently to the stones during the application of the layer in the second step, it will be preferred to carry out the intermediate curing step. If the properties of the coating applied in the first step are not affected, or affected only in a limited way, the intermediate curing step may be dispensed with. In this context it is noted that the adherence of the powder coating layer applied in the first step may be improved, e.g., by pre-treating the stones for conductivity, or by pre-heating the stones. These steps will be described in more detail below. For reasons of process control it is considered preferred at this point in time to carry out a curing step after the stones have been provided with a layer of powder coating on one side and before they are provided with a layer of powder coating on their other side.

The process according to the invention is preferably carried out in a continuous mode.
In this case, the present embodiment of the present invention preferably comprises the steps of
- providing the stones on an endless belt in a single layer
- passing the stones on the endless belt through a powder coating application zone, where they are provided with a layer of powder coating on the side not facing the belt,
- optionally passing the coated stones on the endless belt through a curing apparatus
- transferring the stones to another endless belt in such a manner that they are provided in a single layer on said second belt with at least 50% of the stones having the coated side facing the belt
- passing the stones on the endless belt through a powder coating application zone, where they are provided with a layer of powder coating on the side not facing the belt,
- passing the coated stones on the endless belt through a curing apparatus.

The powder coating application zone will contain a powder coating application apparatus. This may be an electrostatic or tribostatic spray gun such as are conventionally used for applying powder coatings onto substrates.
The nature of the curing apparatus will depend on the nature of the curing mechanism of the powder coating composition. Therefore, it may be an oven for heat-curable powder coating compositions or a UV lamp for a UV-curable composition. These apparatus are known in the art in themselves.

The process comprises the step of transferring the stones to another endless belt in such a manner that they are provided in a single layer on said second belt with at least 50% of them having the coated side facing the belt; in essence comprises turning at least 50% of the stones onto their other side (coated side downwards). Preferably, at least 70% of the stones is turned onto their other side, more preferably at least 80%, still more preferably at least 90%. Most preferably, substantially all of the stones are turned onto their other side, where substantially means that it is the intention to turn all stones over, but that a few may be missed inadvertently.

The turning process can be effected by letting the stones drop from a first endless belt onto a second endless belt, with the speeds of the two belts being matched so that the stones are spread onto the second belt in a single layer.

In another embodiment of the process according to the invention, the stones are provided with a layer of a powder coating composition in a single step by being led through a powder coating application zone in such a manner that at least 70% of the surface of the stones is coated with a powder coating composition, followed by the stones being passed through a curing apparatus where the powder coating composition is cured.

Again, this embodiment is preferably carried out in a continuous mode.
This can be done, for example, by passing the stones on an endless belt through a powder coating application zone, where they are provided with a layer of powder coating, the endless belt being arranged in such a way that the powder coating can reach at least 70% of the surface of the stones, preferably at least 80%, more preferably at least 90%, still more preferably at least 95%, followed by passing the stones on the endless belt through a curing apparatus.
Arranging the endless belt in such a way that the powder coating can reach at least 70% of the surface of the stones can be done in various ways that will be evident to the skilled person, e.g., by using a wire mesh endless belt or a belt equipped with needles arranged in such a way that the stones rest on top of them. The powder coating application zone will contain powder coating application apparatus arranged in such a way that powder coating is applied onto all sides of the stone. The powder coating apparatus may consist of suitably arranged electrostatic or tribostatic spray guns such as are conventionally used for applying powder coatings onto substrates. The powder coating application zone may also be a powder coating fluidised bed, which is known in the art.
For the curing apparatus reference is made to what has been said above for the two-step process.

In the one-step embodiment described above it is preferred to treat the stones so as to improve the adherence of the powder coating composition to the stones. This can be done by heating the stones to a temperature sufficient to improve adhesion, e.g., a temperature above 80°C, preferably between 120 and 180 °C. It can also be done by providing the stones with a conductive layer prior to feeding them into the powder coating application zone, e.g., by adding a conductive additive to the last rinse in a washing cycle, or by spraying a conductive additive onto the stones, for example after washing and classifying.

The thickness of the powder coating layer applied in the process of the present invention is between 20 and 300 microns, preferably between 50 and 120 microns.

Upon completion of the process, at least 70% of the surface of the stones should be covered with a coating layer, preferably at least 80%, more preferably at least 90%, still more preferably at least 95%. Most preferably, substantially all of the surface of the stones is covered with a coating layer, where substantially means that it is the intention to coat the entire surface of the stones, but some parts may be missed inadvertently.

Powder coating compositions suitable for use in the process according to the invention are known in the art. They are, e.g., commercially available from Interpon.
In general, a powder coating composition is a powdery material containing a solid film-forming resin and optional other materials. The particle size distribution of the powder coating composition may be in the range of 0-150 microns, generally up to 120 microns, with a mean particle size in the range of 15-75 microns, preferably 20-50 microns.

The powder coating composition used in the process according to the invention is a curable powder coating composition. It may be a heat-curable system or a UV-curable system. Heat-curable powder coating compositions are preferred.

The availability of a wide selection of powder coatings makes it possible to provide stones with a wide variety of effects. To name but a few, the powder coating composition may be high gloss, intermediate gloss, or low gloss, single colour or multiple colour (speckled), provided with a wrinkle finish, hammer finish, lustrous finish (e.g., metallic).

As indicated above, powder coating compositions comprise a solid film-forming resin, optionally with one or more colouring agents such as pigments, and optionally also contain one or more performance additives.
A powder coating composition for use in the process according to the invention will in general be a thermosetting system (incorporating, for example, a film-forming polymer and a corresponding curing agent which may itself be another film-forming polymer). The film-forming polymer used in the manufacture of a thermosetting powder coating composition may be one or more selected from carboxy-functional polyester resins, hydroxy-functional polyester resins, epoxy resins, and functional acrylic resins. For further information on suitable chemistries reference is made to WO 99/30838, page 6, line 1, through page 8, line 13, herewith incorporated by reference.

The powder coating composition for use according to the invention may be free of added colouring agents, but usually contains one or more such agents (pigments or dyes) and can contain one or more performance additives such as a flow-promoting agent, a plasticiser, a stabiliser, for example a stabiliser against UV degradation, an anti-gassing agent, such as benzoin, a filler, or a material providing specific surface characteristics. Two or more such additives may be present in the coating composition. Examples of pigments which can be used are inorganic pigments such as titanium dioxide, red and yellow iron oxides, chrome, aluminium, iron, and mica pigments and carbon black and organic pigments such as, for example, phthalocyanine, azo, anthraquinone, thioindigo, isodibenzanthrone, triphendioxane and quinacridone pigments, vat dye pigments, and acid, basic, and mordant dyestuffs. Dyes can be used instead of or as well as pigments.

The present invention also pertains to stones provided with a cured layer of a powder coating composition, wherein the stones have a diameter over their largest axis of between 0.5 and 10 cm, preferably between 1.5 and 5 cm, and wherein the cured layer of powder coating composition has a thickness between 20 and 300 microns, preferably between 50 and 120 microns. For preferred properties of the stones and the powder coating compositions, etc., reference is made to what has been said above for the process.
The present invention further pertains to a set of stones provided with a cured layer of a powder coating composition, wherein the stones have a diameter over their largest axis of between 0.5 and 10 cm, preferably between 1.5 and 5 cm, and wherein the cured layer of powder coating composition has a thickness between 20 and 300 microns, preferably between 50 and 120 microns, wherein the diameter over their largest axis of the largest 5% (by number) of stones in a set of stones preferably is at most three 3 times as large as the diameter over their largest axis of the smallest 5% (by number) of stones in a set of stones, more preferably at most 2.5 times, still more preferably at most 2 times. The mean diameter over their largest axis of the stones in a set of stones (by number) preferably is in the range of 1 to 7 cm, more preferably 2-3 cm.

The coated stones of the present invention are suitable for use in many applications. They can be used as decoration, e.g., in flower pots, aquariums, etc., to provide decorative effects inside and outside, e.g., in parks and gardens, in floral arrangements, etc. They can be used as a single colour, but also in colour mixtures, etc.
In a specific embodiment they are used to create removable patterns on a background. This process finds application in the provision of, e.g., removable logos on grass or earth, e.g., for advertising purposes. The advantage of using coated pebbles instead of painting the background is that the pattern can easily be removed. The used pebbles can be re-used in a different location and/or for a different pattern, making for a durable and environmentally friendly decoration system.

The present invention will be illustrated by the following example.

### Example 1

Stones were coated with a commercially available powder coating composition as follows:
The stones were pebbles with a mean diameter over their largest axis of 3 cm. The maximum diameter of the largest 5% (by number) was 2 times the maximum diameter of the smallest 5% (by number).
The powder coating composition was Interpon SW 168 D, commercially available from Akzo Nobel. This is a thermosetting powder coating composition in RAL 9006 white aluminium based on polyester chemistry.
The stones were placed on an endless belt in a single layer and led underneath a powder coating spraying apparatus, where they were coated with the powder coating composition. After curing they were then transferred to another endless belt in such a manner that they were flipped over so that the coated side now faced the belt. Then, they were led underneath a second powder coating spraying apparatus, where they were coated with the powder coating composition. Then, the coated stones were led to a curing apparatus, where they were cured by heat.
Essentially the entire surface of the coated stones thus obtained was covered with a continuous coating layer with a thickness of 80-100 microns.

## Claims

1. A process for coating stones comprising the steps of
o providing stones with a diameter over their largest axis of at most 10 cm in a single layer,
o providing, in one or more steps, the stones with a layer of a powder coating composition in such a manner that at least 70% of the surface of the stones is coated with a powder coating composition.

2. The process of claim 1 wherein the stones are provided with a layer of a powder coating composition in a two-step process comprising the steps of
o providing the stones with a layer of powder coating on one side,
o optionally curing the powder coating,
o providing the stones with a layer of powder coating on their other side, and
o curing the powder coating.

3. The process of claim 2 wherein a curing step is carried out after the stones have been provided with a layer of powder coating on one side and before they are provided with a layer of powder coating on their other side.

4. The process of claim 2 or 3 wherein
o the stones are provided on an endless belt in a single layer
o the stones are passed on the endless belt through a powder coating application zone, where they are provided with a layer of powder coating on the side not facing the belt,
o optionally the coated stones are passed on the endless belt through a curing apparatus,
o the stones are transferred to another endless belt in such a manner that they are provided in a single layer on said second belt with at least 50% of the stones having the coated side facing the belt,
o the stones are passed on the endless belt through a powder coating application zone, where they are provided with a layer of powder coating on the side not facing the belt,
o the coated stones are passed on the endless belt through a curing apparatus, where the powder coating composition is cured.

5. The process of claim 1 wherein the stones are provided with a layer of a powder coating composition in a single step by being led through a powder coating application zone in such a manner that at least 70% of the surface of the stones is coated with a powder coating composition, followed by the stones being passed through a curing apparatus where the powder coating composition is cured.

6. The process of claim 5 wherein the stones are treated so as to improve the adherence of the powder coating composition to the stones.

7. The process of claim 6 wherein the stones are treated by heating them to a temperature of at least 80°C.

8. The process of claim 6 wherein the stones are treated by providing them with a conductive layer so as to improve the adherence of the powder coating composition to the stones.

9. The process of any one of the preceding claims wherein the thickness of the powder coating layer is between 20 and 300 microns, preferably between 50 and 120 microns.

10. A stone provided with a cured layer of a powder coating composition, wherein the stone has a diameter over its largest axis of between 0.5 and 10 cm, preferably between 1.5 and 5 cm, and wherein the cured layer of powder coating composition has a thickness between 20 and 300 microns, preferably between 50 and 100 microns.

11. A stone obtainable by the process of any one of claims 1-9.

12. A set of stones provided with a cured layer of a powder coating composition, wherein the stones have a diameter over their largest axis of between 0.5 and 10 cm, preferably between 1.5 and 5 cm, and wherein the cured layer of powder coating composition has a thickness between 20 and 300 microns, preferably between 50 and 120 microns, wherein the diameter over their largest axis of the largest 5% (by number) of stones in the set of stones is at most 3 times as large as the diameter over their largest axis of the smallest 5% (by number) of stones in the set of stones, more preferably at most 2.5 times, still more preferably at most 2 times.

13. Use of stones of claim 8 or 9 or a set of stones of claim 12 to provide decorative effects, in particular for creating removable decorations on a background.

14. Removable decoration comprising the stones of claim 8 or 9 or a set of stones of claim 12.
